# EUROPEAN PATENT APPLICATION

(11) **EP 2 613 552 A2**
(43) Date of publication of application: **10.07.2013**
(21) Application number: 12167989.8
(22) Date of filing: 15.05.2012
(51) Int. Cl.: H04N 21/431

(54) **Method for moving image reproduction processing and mobile information terminal using the method**

(30) Priority: 17.11.2011 JP 2011026648 F; 31.03.2012 JP 2012083404; 17.11.2011 JP 2011026649 F; 17.11.2011 JP 2011026653 F; 17.11.2011 JP 2011026663 F; 17.11.2011 JP 2011026664 F; 17.11.2011 JP 2011026667 F
(71) Applicant: Axell Corporation, Tokyo 101-8973 (JP)
(72) Inventor: Kyakuno, Kazuki, Tokyo (JP)
(74) Representative: Ilgart, Jean-Christophe

(57) **Abstract**

There is provided a mobile information terminal that can satisfy the limitation on hardware or power consumption as well as in a current situation as before, switch from the display of the moving image decoded by the software decoder to the display of the corresponding moving image decoded by the hardware decoder, and display it. A CPU (11) in a mobile information terminal (1A) decodes in real time a plurality of pieces of moving image information delivered with multi-streams from a desired network by a software decoder (16) and displays the moving images as thumbnail moving image, i.e., reduced moving image having relatively low resolution, on divided areas of a display section (19). When any one of moving images is selected by an operator through a touch panel (20), the CPU (11) terminates decoding for four moving image information by the software decoder (16) and simultaneous dividing display thereof, and switches to the decoding by the hardware decoder (17) for the information having a high resolution related to the selected one moving image and at the same time, switches to the full screen display of the display section (19).

## Description

### BACKGROUND OF THE INVENTION

### 1. Technical Field

The present invention relates to a method for moving image reproduction processing and a mobile information terminal using the method, and particularly, a method for moving image reproduction processing adopted in a mobile information terminal having a limitation that it has only one hardware decoder.

### 2. Background Art

JP-A-2005-110286 (or US 2005/0071782 A1) discloses a video image miniaturizer that produces one or a plurality of small alternative video images (thumbnail video images) by decoding a video image at a given bit rate and a given resolution lower than those of an original image in a full-size version (see paragraph [0019], video image miniaturizing system 100 of Fig. 1, and content delivering system of Fig. 6 described in JP-A-2005-110286). Further, it discloses a reduced video image UI (User Interface) producer that displays a plurality of thumbnail video images which the video image miniaturizer produces (see paragraph [0039], Figs. 3, 4A and 4B described in JP-A-2005-110286) and also for example, in Fig. 3 of JP-A-2005-110286, when one of the thumbnail video images is selected, the corresponding full scale video image is displayed with the full screen on the display section (in connection with this, the thumbnail video image is displayed on the full screen) (see paragraphs [0046], [0047] described in JP-A-2005-110286). In addition, all of these images are the moving images (see paragraph [0039] described in JP-A-2005-110286).

In recent years, as an advanced model of the conventional mobile phone, a mobile information terminal (for example, so-called a smart phone) which can contain a variety of functions has been rapidly spread. As such functions, there are a mobile phone function, an Internet function, a data storage function, a media reproduction function, a game function and the like.

The above-mentioned mobile information terminal includes only one hardware decoder due to the limitation on the hardware and thus in reproduction of the moving image, it is general that the one hardware decoder is operated to display the moving image with the full screen on the display screen. That is, since the one hardware decoder corresponds to the full screen of the display screen, it is not possible to reproduce the moving image on a part of area of the display screen so far as the hardware decoder is used. In other words, for example, it is not possible to reproduce simultaneously a plurality of moving images on the one display screen. Further, since the display of web content and the reproduction of the moving images cannot be performed in parallel on the one display screen, it is not possible to cope with an aspect of delivering a moving image advertisement on a part of the web browser. In particular, it is not a preferable scheme to provide a plurality of hardware decoders in order to reproduce simultaneously a plurality of moving images on one display screen in view of design such as limitation on OS (operating system) for the mobile information terminal and particularly in view of the increased cost.

Meanwhile, in a case of using the software decoder, it is possible to reproduce the moving image on a part of area of the display screen. However, there is a disadvantage in that the processing speed is lower than that in a case processing by the hardware decoder and also the moving images having a high resolution cannot be decoded. Further, it is difficult to synchronize the moving image with a sound. In addition, in a case of operating simultaneously the plurality of software decoders, it is possible to display the plurality of moving images in parallel. In this case, however, since the power consumption is extremely high, it is not practical and thus has not been implemented yet.

Furthermore, JP-A-2005-110286 does not assume a mobile information terminal, and therefore, there is no consideration for aspects of the limitation on the hardware or the power consumption.

### SUMMARY OF THE INVENTION

The present invention is made to overcome the problems as mentioned above and an object of the invention is to provide a moving image reproduction processing method in a mobile information terminal and a mobile information terminal using the method, that can satisfy the limitation on hardware or power consumption as well as in a current situation as before, switch from the display of the moving image decoded by the software decoder to the display of the corresponding moving image decoded by the hardware decoder, and display it.

In order to achieve the above object, an aspect of the present invention provides a method for moving image reproduction processing in a mobile information terminal, the method including: decoding encoded moving image information by a software decoder to display a moving image related to the moving image information on a display section; and switching a processing for the moving image information from a process of decoding by the software decoder to a process of decoding by a hardware decoder to display the moving image information on the display section in accordance with an instruction by an operator.

The encoded moving image information decoded by the software decoder may be information having a resolution lower than that of the encoded moving image information decoded by the hardware decoder. In this case, the moving image based on the decoding by the software decoder is reduced and displayed on the display section, and the moving image based on the decoding by the hardware decoder is displayed with a full screen or an enlarged view on the display section.

The method may be configured so that a plurality of moving images based on the decoding by the software decoder are simultaneously displayed on the display section, and the instruction by the operator is an operation for selecting one of the plurality of moving images. In this case, information of the plurality of moving images may be delivered with multi-streams from the outside.

Here, the method may be configured so that the plurality of moving images are reproduced with streams, and when the selection operation is performed, the moving image selected by the selection operation is reproduced with streams continuously by the hardware decoder.

Alternatively, the method may be configured so that the plurality of moving images are reproduced with streams, and when the selection operation is performed, high resolution information related to the moving image selected by the selection operation is stored first in a moving image information storage and a moving image related to the high resolution information is reproduced from a head part by the hardware decoder.

Meantime, the method may be configured so that a web content and the moving image based on the decoding by the software decoder as a moving image related to the web content are displayed on the display section in an overlapping manner and when the instruction by the operator is performed, the moving image based on the decoding by the hardware decoder is displayed with the full screen or the enlarged view on the display section. In this case, alpha channel information may be included in the moving image information related to the moving image, and alpha blend display may be performed in display overlapping with the web content.

The method may be configured so that a plurality of moving images based on the decoding by the software decoder are simultaneously displayed with a moving image display frame on the display section, and the plurality of moving images are shifted between frames while fixing the moving image display frame, or the plurality of moving images are shifted together with the moving image display frame in accordance with an operation of tracing on the display section by the operator.

The method may be configured so that the plurality of moving images based on the decoding by the software decoder are classified by categories, and the plurality of moving images are simultaneously displayed on category basis.

Moreover, in order to achieve the above object, another aspect of the present invention provides a mobile information terminal, including: a CPU (Central Processing Unit) that is adapted to control entirely processing of the mobile information terminal; a hardware decoder that is adapted to decode an encoded moving image information; and a display section that is adapted to display a moving image related to the decoded moving image information, wherein the CPU controls a software decoder to decode the encoded moving image information to display a moving image related to the moving image information on the display section, and the CPU switches a processing for the moving image information from a process of decoding by the software decoder to a process of decoding by the hardware decoder to display the moving image information on the display section when there is an instruction by an operator.

The encoded moving image information decoded by the software decoder may be information having a resolution lower than that of the encoded moving image information decoded by the hardware decoder. In this case, the CPU reduces and displays the moving image based on the decoding by the software decoder on the display section and displays the moving image with a full screen or an enlarged view on the display section based on the decoding by the hardware decoder.

The terminal may be configured so that the CPU decodes a plurality of pieces of encoded moving image information in parallel by the software decoder to display a plurality of moving images related to the plurality of pieces of encoded moving image information simultaneously, and when the CPU recognizes a selection instruction by the operator for the plurality of images, the CPU switches the processing for the selected image to the process of decoding by the hardware decoder to display the selected moving image with the full screen or the enlarged view on the display section. Further, the terminal further includes a communication processing unit that is adapted to receive the plurality of the encoded moving image information delivered with a multi-stream.

The terminal may be configured so that the CPU displays a web content and the moving image based on the decoding by the software decoder as a moving image related to the web content on the display section in an overlapping manner, and when the instruction by the operator is performed, the CPU displays the moving image based on the decoding by the hardware decoder with the full screen or the enlarged view on the display section.

The terminal may be configured so that the mobile information terminal has a size that is able to be gripped in one hand, while gripping the mobile information terminal at a vertically long state, the CPU feeds sequentially the moving images based on the decoding by the software decoder in vertical direction to display new moving images, and the number of column in the transverse direction is 2 or less.

The CPU may display additional information for distinguishing between at least the moving image and another moving image on an upper portion or a lower portion of the moving image based on the decoding by the software decoder.

The number of the column in the transverse direction may be 1.

The terminal may be configured so that the mobile information terminal has a size that is able to be gripped in one hand, while gripping the mobile information terminal in a transversely long state, the CPU feeds sequentially the moving images based on the decoding by software decoder in transverse direction to display new moving images, and the number of column in the vertical direction is 4 or less.

The number of the column in the vertical direction may be 3.

The terminal may be configured so that the number of the column in the vertical direction is 2, and the CPU displays additional information for distinguishing between at least the moving image and another moving image on an upper portion or a lower portion of the moving image based on the decoding by the software decoder.

The terminal may be configured so that the CPU decodes a plurality of pieces of encoded moving image information in parallel by the software decoder to display a plurality of moving images related to the plurality of pieces of encoded moving image information which are divided by a moving image display frame on the display section simultaneously, and the CPU shifts the plurality of moving images between frames while fixing the moving image display frame, or the CPU shifts the plurality of moving images together with the moving image display frame in accordance with an operation of tracing on the display section by the operator.

The terminal may be configured so that the mobile information terminal has a size that is able to be gripped in one hand, and the CPU switches the display on the display section between a vertically long display and a transversely long display depending on a gripping state of the mobile information terminal, and changes the number of transverse/vertical display of moving images based on the decoding by the software decoder and a display size of the individual moving images.

The CPU may display a menu screen having a plurality of information display sections on the display section, and displays the moving image based on the decoding by the software decoder in each of the plurality of information display sections.

The terminal may be configured so that the plurality of moving images based on the decoding by the software decoder are classified by categories, and the CPU displays a plurality of category switching sections for switching the plurality of moving images on category basis on the menu screen.

In the method for moving image reproduction processing and the mobile information terminal using the method according to an aspect of the present invention, the mobile information terminal not only satisfies the limitation on hardware or power consumption in similar as before, but also is able to switch from the display of the moving image decoded by the software decoder to the display of the moving image decoded by the hardware decoder and to display the switched moving image.

Particularly, when the encoded moving image having a low resolution is decoded by the software decoder and displayed, the processing speed is not reduced and also the power is not consumed excessively. Further, after decoding by the hardware decoder, it is possible to display the moving image having a high resolution with the full screen or in the enlarged view.

In addition, since in the aspect that a plurality of moving images is simultaneously displayed in parallel and the image to be displayed with the full screen or in the enlarged view is selected, generally, it takes relatively less time to select it, and there is no problem in an excessive consumption of power.

Further, when web content and a moving image related thereto are displayed simultaneously, it is possible to display the moving images in an overlapping manner by processing in parallel alpha-channel information by the software decoder in which the alpha-channel can be adapted.

### BRIEF DESCRIPTION OF THE DRAWINGS

In the accompanying drawings:
Fig. 1 is a block diagram illustrating a configuration of a mobile information terminal according to a first embodiment of the present invention;
Figs. 2A and 2B are flowcharts illustrating process a moving image reproduction processing method according to the first embodiment of the present invention, in which Fig. 2A shows a case of reproducing a selected moving image with continuous streams, and Fig. 2B shows a case of playing back the moving image repeatedly after downloading the information related to the selected moving image;
Fig. 3 illustrates a specific example of a display on a display section according to the moving image reproduction processing method of the first embodiment;
Fig. 4 illustrates a specific example of an outer appearance of a mobile information terminal according to the moving image reproduction processing method of the first embodiment;
Fig. 5 is a block diagram illustrating a configuration of a mobile information terminal according to a second embodiment of the present invention;
Fig. 6 is a flowchart illustrating process of the moving image reproduction processing method according to the second embodiment of the present invention;
Fig. 7 is a block diagram illustrating a specific example of a display on a display section according to the moving image reproducing processing method of the second embodiment;
Fig. 8 shows an appearance of switching display on a display section between a vertically long display and a transversely long display in a first modification; and
Figs. 9A and 9B show examples for displaying a menu screen in a display section in a fourth modification.

### EXEMPLARY EMBODIMENTS OF THE INVENTION

Hereinafter, a detailed description of exemplary embodiments of the present invention will be described with reference to the attached drawings.

### (First Embodiment)

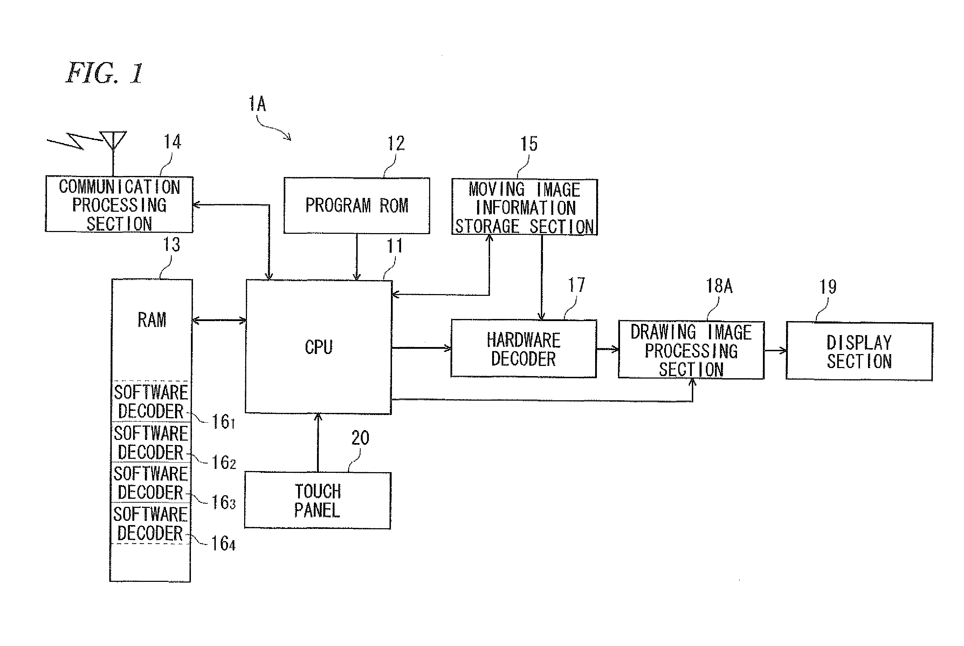

Fig. 1 is a block diagram illustrating a configuration of a mobile information terminal according to a first embodiment of the present invention. As shown in Fig. 1, a mobile information terminal 1A according to the first embodiment of the present invention includes a CPU (Central Processing Unit) 11 that controls the progress of the process and each part in the terminal, a program ROM (Read Only Memory) 12 in which programs for performing various processes in the terminal are stored in advance, a RAM (Random Access Memory) 13 in which data is stored temporarily associated with program in running or execution of the process, a communication processing section 14 that performs various processes such as modulation and demodulation for the received data and transmission data so that the terminal performs the communication with various networks, a moving image information storage section 15 that can store a plurality of pieces of moving image information, a hardware decoder 17 that is constituted with hardware to decode the encoded moving image information, a drawing image processing section 18A that includes a video memory and performs various processes for the decoded moving image information as well as organizing the decoded information as a displayable information, a display section 19 for displaying the moving image information transferred from the drawing image processing section 18A, a touch panel 20 that is disposed physically to be laminated on the display section 19 and when an operator touches the touch panel 20 with his finger or the like, the position information of the touched position is sent to the CPU 11. Further, in a case where the encoded moving image information is decoded by software, when running the software, the software decoders 16₁ to 16₄ (for example, in a case of decoding four moving images in parallel) are loaded in the RAM 13.

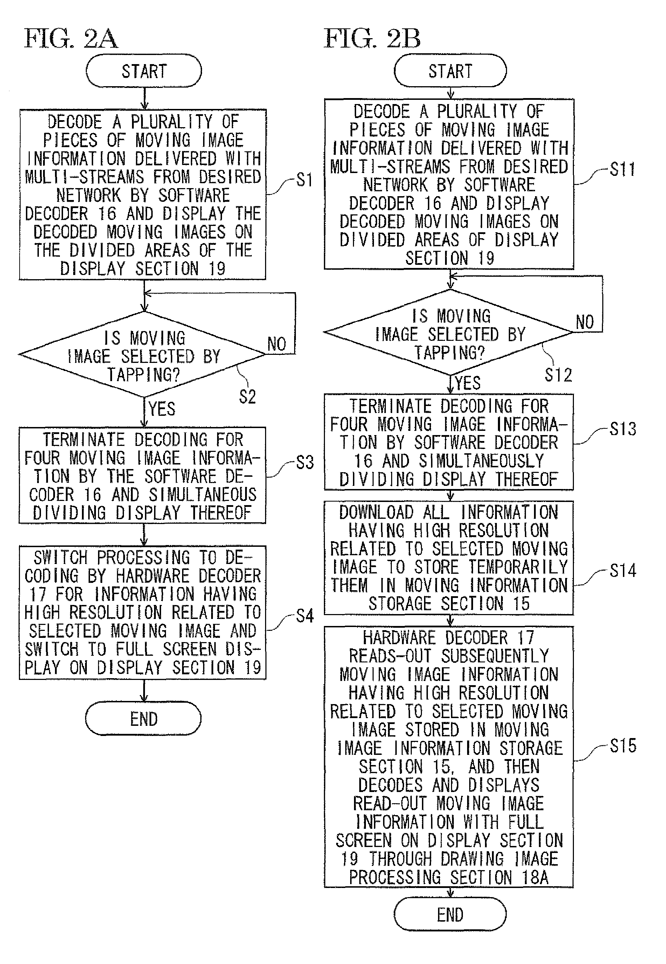

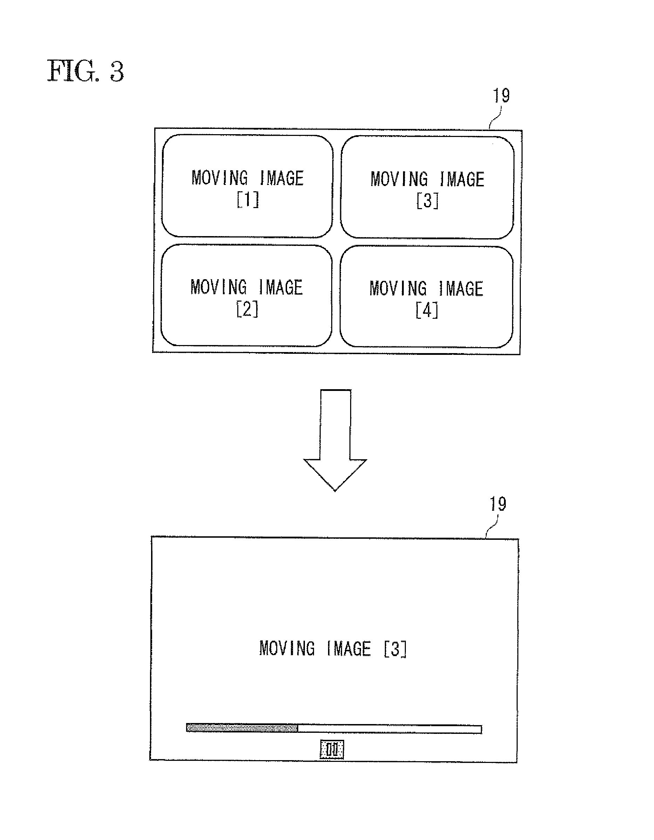

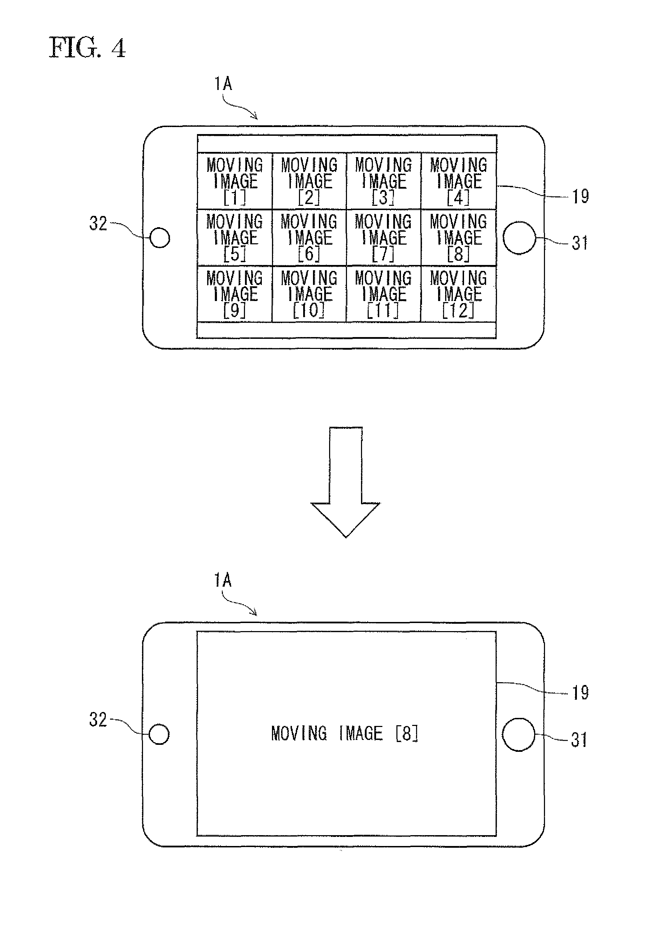

Figs. 2A and 2B are flowcharts each illustrating a process of a moving image reproduction processing method according to the first embodiment of the present invention, in which FIG 2A is a flowchart of a case of reproducing with continuous streams a selected moving image, and Fig. 2B is a flowchart of case of reproducing again the moving image after downloading information related to the selected moving image. Fig. 3 is a diagram illustrating a specific example of the display of the display section 19 in the moving image reproduction processing method according to the first embodiment. Fig. 4 is a diagram illustrating a specific example of the outer appearance of the mobile information terminal 1A in the moving image reproduction processing method according to the first embodiment.

The case of reproducing with continuous streams a selected moving image will be described with reference to Fig. 2A. Herein, first, the mobile information terminal 1A decodes in real time a plurality of pieces of moving image information delivered with multi-streams from a desired network by the software decoder 16 and displays the decoded moving images as thumbnail moving images (reduced moving image having a relatively low resolution) on the divided areas of the display section 19 (Step S1). Further, in this step, since the moving image information delivered with the multi-streams is the encoded information of the moving image information having a low resolution, it does not only compress the capacity of the communication path, but also does not consume the power excessively when decoding by the software decoder 16.

More specifically, in a case where one moving image from four moving image information delivered with multi-streams is selected, for example, the four moving image information loaded through the communication processing section 14 are decoded respectively by the software decoders 16₁ to 16₄ under control of the CPU 11, and a given processing is performed in the drawing image processing section 18A, and thereafter, moving image [1] to moving image [4] are displayed on the display section 19 as shown in upper portion of Fig. 3. Further, the division manner of the display area in the display 19 may be very diverse. It is not limited to the example shown in the upper portion of Fig. 3, and for example, it is not necessary that each area has the same size and it may be a shape other than a rectangular shape as shown in Fig. 3, such as circle or elliptical shape.

Here, in the processing by the plurality of software decoders 16, provided that an optimized decoding technique according to the instruction set of the CPU 11 is adopted, the power consumption is reduced more.

Next, the CPU 11 determines whether or not a desired moving image is selected by operator's tapping to the touch panel 20, based on a signal from the touch panel 20 (Step S2). The CPU 11 waits the operator's tapping while the determination is in non-selection. Meanwhile, in a case where the operator's tapping to the touch panel 20 is recognized, the CPU 11 recognizes the tapped position based on the signal from the touch panel 20 and then recognizes the displayed moving image corresponding to the position, thereby recognizing the moving image selected by the operator.

When a moving image is selected by the operator is recognized, the CPU 11 controls to terminate the decoding for four moving image information by the software decoder 16 and the simultaneous dividing display thereof (Step S3), controls to switch to the decoding by the hardware decoder 17 for the information having a high resolution related to the selected one moving image and at the same time, to switch to the full screen display of the display section 19 (Step S4). Specifically, the CPU 11 obtains reproduction time information of the selected moving image at the time point that the signal is input from the touch panel 20 and transmits the obtained information to a delivery origin through a network. The delivery origin transmits information that the moving image information having a high resolution after the reproduction time is encoded and the CPU 11 instructs the hardware decoder 17 to decode the information that the moving images having a high resolution which are successively transmitted are encoded. In this way, the display section 19 displays continuously the selected moving image with a high resolution on the full screen from the time point corresponding to the reproduction time information. Thus, apparently, it is possible to display with seamless. In addition, Fig. 3 illustrates a case that the moving image [3] is selected by the operator.

Fig. 4 is a diagram illustrating an example of the screen change of the display section 19 on the whole outer appearance of the mobile information terminal 1A. Fig. 4 shows a front face of the mobile information terminal 1A, and the front face presents the display section 19, a home button 31 and an earpiece 32. Fig. 4 shows that when a plurality of moving images by software decoder 16 are displayed simultaneously, the moving image [1] to moving image [12] are displayed and in this state, moving image [8] is selected by operator.

Further, in the state that the plurality of moving images is displayed in the upper portion as shown in Fig. 4, by an operator's tracing to the touch panel 20, it is possible to shift the plurality of moving images that has been reproduced and displayed between frames without shifting a moving image display frame. This is implemented by making the CPU 11, which recognizes the signal from the touch panel 20, instruct the drawing image processing section 18A. For example, in the state shown in the upper drawing of Fig. 4, if the operator traces with his finger in left or right directions, each of blocks of "moving image[1], moving image[5], moving image[9]", "moving image[2], moving image[6], moving image[10]", "moving image[3], moving image[7], moving image[11]" and "moving image[4], moving image[8], moving image[12]" is all together shifted in left or right in the moving image display frame. Further, similarly, if the finger traces in up or down direction, each block of "moving image[1], moving image[2], moving image[3], moving image[4]", "moving image[5], moving image[6], moving image[7], moving image[8]" and "moving image[9], moving image[10], moving image[l1], moving image[12]" is all together shifted in up or down direction in the moving image display frame. Further, Fig. 4 shows an example of a case that the moving images are displayed in 3 rows and 4 columns (3 columns in vertical direction, 4 columns in transverse direction (hereinafter, referred to as a vertical 3 column, a transverse 4 column)) in a state (the longitudinal direction of the terminal coincides with the direction which the operator's both right and left eyes are connected by a line) that the mobile information terminal 1A places in a transversely long state. Note that it is not limited only to the example shown in Fig. 4.

Further, the size of the mobile information terminal 1A is a size that can be gripped in one hand and ordinarily, since the operator's finger tip operates a desired key or moves across the display frame of the moving image while gripping with a vertically long state (the longitudinal direction of the terminal is perpendicular to the direction connecting both right and left eyes of the operator), the optimum number of moving image displayed in this case is determined depending on size of the moving image, ratio of the vertical length and transversal length, and size of the display screen of the mobile information terminal 1A and is determined to be able to select easily a desired moving image from among a plurality of moving images as mentioned below.

When the mobile information terminal 1A is gripped with the vertically long state, the number of column of transverse direction is preferably 2 or less. In a case where the number of column is 1, new moving images is sent out quickly and sequentially in vertical direction so as to select and therefore at this time, it is possible to select a desired image in a state that image size of the moving images is the largest. Alternatively, 3 columns can be also used since a desired moving image can be selected in short time although the display size of the respective moving images becomes small.

Herein, for selecting a desired one from among the plurality of moving images, it is not determined by only the moving image, but can be determined by additional information at least provided for distinguishing between a target moving image and other moving images on the upper portion or lower portion (or, a portion adjacent to right or left), thereby being able to do the selection conveniently. As the additional information, for example, it may be considered that title, genre or the like of the moving image content is displayed by a character or symbol.

Meanwhile, in a case where the mobile information terminal 1A is gripped in the transversely long state as exemplified in Fig. 4, since a shape of the moving image is generally transversely long, if griping the mobile information terminal 1A in the transversely long state responding thereto, the number of moving images displayable on the wide screen is much more than that of the case of griping the vertically long state as mentioned above. Therefore, a desired moving image can be selected from the plurality of moving images in a short time. In this case, the new moving images are delivered in the direction of up and down or right and left, but particularly, the delivery into right and left direction is general. In considering the relationship between visibility and recognizing ability of the individual moving image, the number of column of moving images is preferably 4 or less in vertical direction. If it is 3 columns as shown in Fig. 4 and the operator thinks the selecting operation according to a result of his simultaneous visual recognition for the moving image of the vertical 1 column by the operator's visual observation, the selection efficiency is more practical. Further, if it is the vertical 2 columns, the additional information can be provided on the upper portion or lower portion of the moving image for distinguishing between the corresponding moving image and other moving image as mentioned above, and therefore, it is possible to implement the selecting operation more conveniently and quickly.

Further, even in a case where the terminal is gripped at either the vertically long state or the transversely long state, a configuration that is switched to an optimum moving image arrangement according to the grip state as mentioned above can be also adopted. That is to say, in order that each of several moving images is displayed in vertical and transverse directions, it is also possible to constitute such that the switching is performed by a touch operation on screen so as to be changed appropriately.

Next, a case that information related to the selected moving image is downloaded and thereafter, the moving image is reproduced again will be described with reference to Fig. 2B. Herein, first, as in the case of Fig. 2A, the mobile information terminal 1A decodes in real time a plurality of pieces of moving image information delivered with multi-streams from a desired network by the software decoder 16 and displays the moving images as thumbnail moving image (reduced moving image having relatively low resolution) on the divided areas of the display section 19 (Step S11). Further, since the moving image information delivered with the multi-streams in this step is information that the moving image information having a low resolution is encoded, it does not only compress the capacity of the communication path, but also does not consume the power excessively even when decoding by the software decoder 16.

Next, in similar to the case of Fig. 2A, the CPU 11 determines whether or not the operator taps the touch panel 20 based on the signal from the touch panel 20 to select a desired moving image (Step S12). The CPU 11 waits for the operator's tapping while the determination is in non-selection. Meanwhile, in a case where the operator's tapping to the touch panel 20 is recognized, the CPU 11 recognizes the tapped position based on the signal from the touch panel 20 and then recognizes the displayed moving image corresponding to the position, thereby recognizing the moving image selected by the operator.

When a moving image is selected by the operator is recognized, the CPU 11 terminates the decoding of four moving image information by the software decoder 16 and the simultaneously divided display thereof (Step S13) as well as downloading all information having a high resolution related to the selected moving image in order to store temporarily them in the moving information storage section 15 (Step S14). After that, based on the instruction by the CPU 11, the hardware decoder 17 reads-out subsequently the moving image information having a high resolution related to the selected moving image stored in the moving image information storage section 15, and then decodes and displays the read-out moving image information with the full screen on the display section 19 through the drawing image processing section 18A (Step S15). Further, it is on the assumption that in case of Fig. 2B, the reproduction is performed from the head part of the selected moving image. On the one hand, it is possible to reproduce the moving image repeatedly plural times without any requiring to network response. In addition, in this case, it may be configured so that there is a difference between the moving image which is decoded and reproduced by the software decoder 16 and the moving image downloaded, decoded and reproduced by the hardware decoder 17. That is to say, typically, it may be configured so that the moving image which is decoded and reproduced by the software decoder 16 is an index or promotion for the moving image downloaded from the moving image which is decoded and created by hardware decoder 17.

Further, the above mentioned-embodiment describes a case that a plurality of pieces of moving image information is delivered with multi-streams from network and the like. Alternatively, it may be also considered a case where one moving image from information of the plurality of moving images stored in advance in the moving image information storage section 15 is selected in order to be reproduced. Furthermore, regardless of whether the moving image information is delivered from the external or is stored in advance in the internal, the moving image information includes moving image information of game, film media or the like.

As mentioned above, in the above-mentioned first embodiment, in order to promote the operator's selection, a plurality of moving images is reproduced simultaneously. After selected, when displaying the selected moving image, there is no need to add the hardware. Further, even using the software decoder for the reproduction of a plurality of moving images, the moving image information can be processed as moving image information having a low resolution, and therefore, there is no problem in the processing speed. Furthermore, since it is not required much time to select, it is required only a usual time, there is no problem in the excessive consumption of power. Further, after selected, the full screen display is performed with a high resolution by a hardware decoder that is fast in processing speed, especially faster than the processing by the software decoder.

### (Second Embodiment)

Next, for example, a description will be made of a case that in an application which runs by the mobile information terminal, a part of moving images is displayed overlapping to a web content, and when one moving image is selected, the selected moving image is displayed with the full screen.

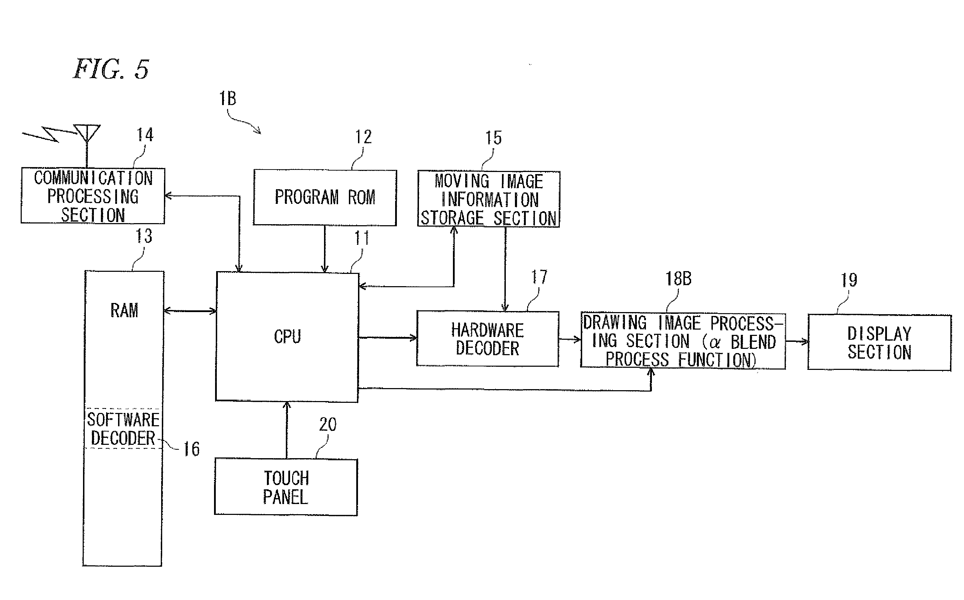

Fig. 5 is a block diagram illustrating a configuration a mobile information terminal according to a second embodiment of the present invention. A mobile information terminal 1B according to the second embodiment of the present invention as shown in Fig. 5 includes a CPU 11 that controls a progress of process or each section in the terminal, a program ROM 12 in which programs for running various processes in the terminal is stored in advance, a RAM 13 in which data associated with the programs or processes which is running is stored temporarily, a communication processing section 14 that performs various processes such as modulation and demodulation for received data and transmission data when the terminal executes the communicating with various networks, a moving image information storage section 15 for storing a plurality of pieces of moving image information, a hardware decoder 17 that is adapted to decode the encoded moving image information and is constituted with a hardware, a drawing image processing section 18B that includes a video memory and performs various processes including particularly, an alpha (α) blend process for the decoded moving image information and also organizes the information as displayable information, a display section 19 that displays the moving image information from the drawing image processing section 18B, and a touch panel 20 that is disposed in physically laminated to the display section 19 and by an operator's finger touch thereon, a position information of the touched position is sent to the CPU 11. Further, in a case where the encoded moving image information is decoded by the software, when running the software, the software decoder 16 is loaded in the RAM 13.

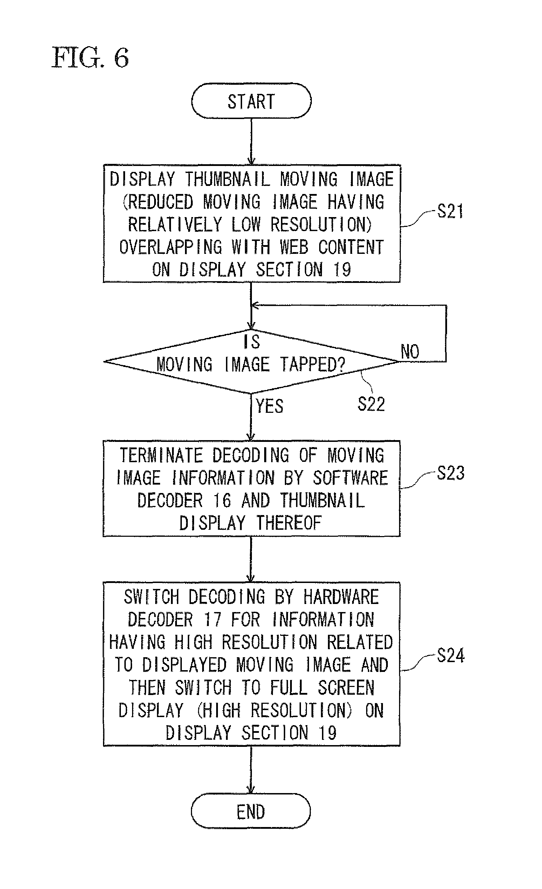

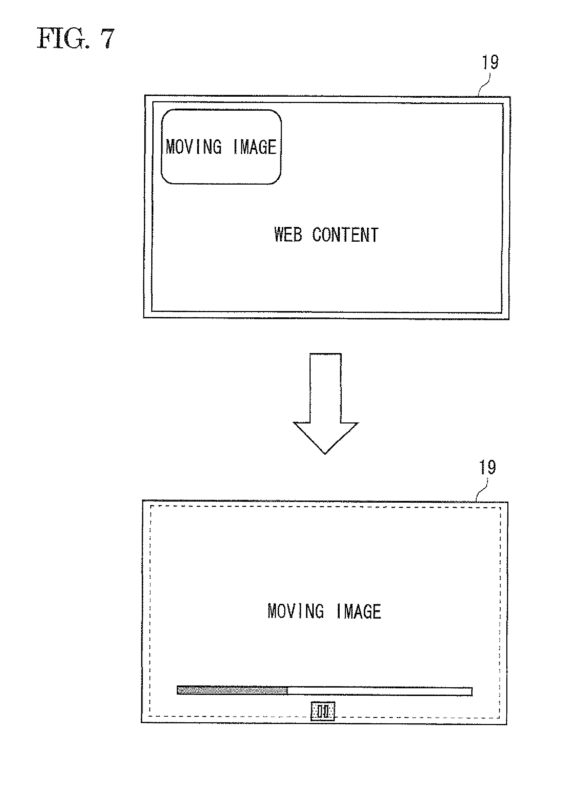

Fig. 6 is a flowchart illustrating process of the moving image reproduction processing method according to the second embodiment of the present invention. Fig. 7 is a diagram illustrating a specific example of the display on the display section 19 in the moving image reproduction processing method according to the second embodiment.

The mobile information terminal 1B displays a thumbnail moving image (a reduced moving image having a relatively low resolution) overlaying with a web content on the display section 19 as shown Fig. 7 as the processing in the application program (Step S21). Specifically, the CPU 11 instructs to download the web content and a moving image having a low resolution related to the web content to the communication processing section 14. The downloaded moving image information is displayed on the display section 19 to be decoded by the software decoder 16 and to be overlaid with the web content.

Hereinafter, the overlaying display will be described. That is to say, generally, a hardware decoder does not correspond to the alpha-channel, but the software decoder has a function to add alpha-channel information (for example, α value has 1 to 255) in addition to information of R, G, B for each pixel. Thus, this α value can be set variably. In other words, by setting variably the blend ratio, it is possible to change the viewing manner when the moving image is overlapped on the content. For example, if the α value is set to 255 for the moving image information, it is caused to become opaque and thus only moving image is displayed, and for example, if the α value is set to 127, it is caused to become half-transparent and thus, moving images and the web content are displayed simultaneously.

Next, the CPU 11 determines whether or not the tapping to moving image is made by the operator, based on the signal from the touch panel 20 while being in reproduction by tapping the touch panel 20 (Step S22). While the tapping has not still been made, the CPU 11 waits for the tapping by the operator.

Meanwhile, if recognized that a moving image is tapped by the operator while reproducing, based on the signal from the touch panel 20, the CPU 11 terminates the decoding of the moving image information by the software decoder 16 and the thumbnail display thereof (Step S23), and switches to the decoding by the hardware decoder 17 for the information having a high resolution related to the displayed moving image and then switches the display to the full screen display on the display section 19 (Step S24).

Further, the seamless display manner from the thumbnail moving image to the full screen display by the hardware decoder 17 is similar to that in the first embodiment.

As mentioned above, by the above-mentioned second embodiment, it is possible to display in overlay by processing in parallel α channel information by the software decoder in which α channel can be adopted when the web content and the moving images related thereto are displayed simultaneously. As a result, for example, it is possible to display simultaneously the web content and the moving image advertisements related thereto. By multiple-displaying like this, it is possible to refer to the both at the same time and also to obtain information quickly and correctly. Accordingly, it is not necessary to add hardware and since image information is able to process as the image information having a low resolution by the software decoder, it does not cause any problem in processing speed and also even in the excessively consumed power. In particular, if the blend ratio is adjusted (for example, an operator adjusts by a hardware button) in a case of bilateral displaying in overlapping, it is possible to select an object which the operator wants to pay attention freely. On the other hand, when the moving image is displayed on the full screen, the image can be displayed with high resolution by using the hardware decoder which has a fast processing speed.

Further, the above-mentioned second embodiment is a manner such that one moving image related to the web content is displayed. Alternatively, it may be a manner such that a plurality of moving images are displayed in order to select one moving image as described in the first embodiment.

Exemplary embodiments of the present invention have been described above. The present invention can be implemented as various modifications as mentioned below.

### (First modification)

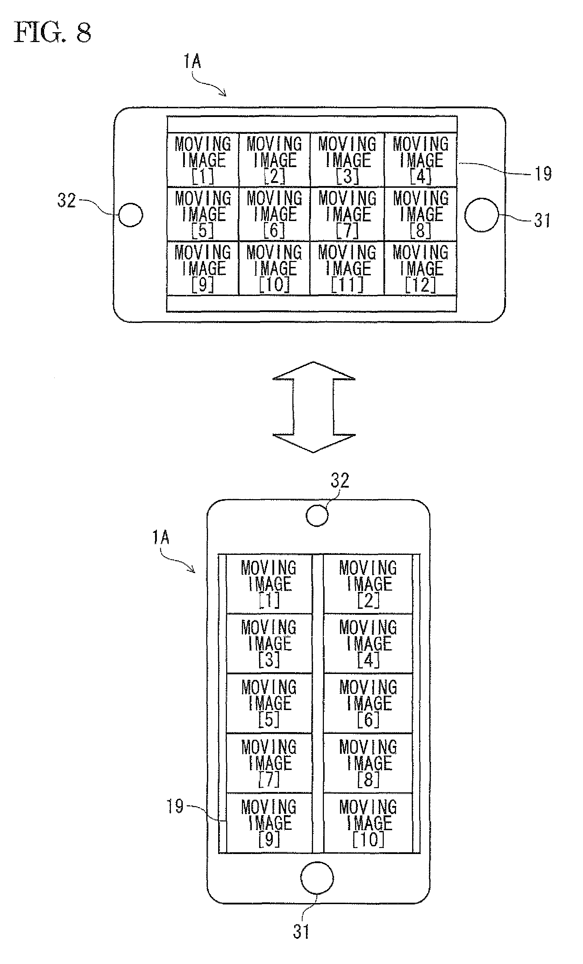

In the above-mentioned first embodiment, description is made of each of a case of gripping the mobile information terminal 1A in a vertically long state and a case of gripping the mobile information terminal 1A in a transversely long state. It may be configured so that the display manner is switched between a vertically long display and a transversely long display by providing a sensor in the mobile information terminal 1A to detect its gripping state or performing a particular operation (for example, touch panel operation or press of a specific button is considered) of the mobile information terminal 1A by an operator. Fig. 8 shows an appearance of switching display screen of the mobile information terminal 1A between the vertically long display and the transversely long display. As shown in Fig. 8, when the display mode is switched from the transversely long display to the vertically long display, the number of transverse/vertical display of the moving images and a display size of the individual moving images are changed. In the example of Fig. 8, 3 rows and 4 columns display is changed to 5 rows and 2 columns display (this is merely an example, and the number is not limited thereto). In this way, even when the operator changes the gripping state of the mobile information terminal 1A, it is possible to perform the display in consideration with the operator's visibility. When the display mode is to be changed from the vertically long display to the transversely long display, similar processing can be performed.

### (Second modification)

The above-mentioned first embodiment shows an example in which, when the operator traces on the touch panel 20 of the mobile information terminal 1A, the plurality of moving images reproduced and displayed is shifted between the frames without moving the moving image display frame. Alternatively, it may be configured so that, when the operator traces on the touch panel 20, the plurality of moving images reproduced and displayed is shifted together with the moving image display frame that surrounds the moving images. When the moving image display frame is shifted up, down, right or left direction, a hidden part of the moving image display frame is sequentially appears. Namely, only a part of the moving image may be displayed for the moving image disposed on an up, down, right or left end side of the display section 19.

### (Third modification)

In the above-mentioned first and second embodiments, when the moving image is selected by the tapping operation by the operator, the moving image having a high resolution is displayed on the display section 19 with the full screen display. However, the display of the selected moving image is not necessarily performed with the full screen display, but for example, it may be configured to perform up screen display or down screen display in which the selected moving image is enlarged in a upper-half part of a lower-half part of the display section 19. The proportion or ratio of the upper part and the lower part may be 1/2, or can be set to be an arbitrary value. For example, when a moving image is displayed in the upper part and attribute information such as a title of the moving image is displayed by characters in the lower part, a region for displaying the characters is secured as a region of the lower part.

### (Fourth modification)

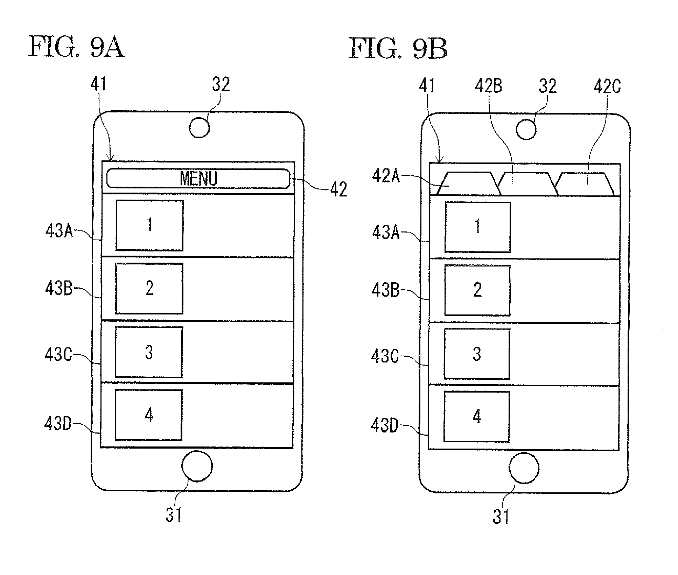

The above-mentioned first embodiment shows an example in which only the moving image display frame and the plurality of moving images in the frame are displayed on the display section 19. However, various display modes in addition to displaying the moving image display frame and the moving images can be considered. Figs. 9A and 9B show examples in which a menu screen 41 is displayed in the screen on the display section 19. The menu screen 41 is divided into a menu character display section 42 and a plurality of information display sections 43A to 43D. Each of the plurality of information display sections 43A to 43D includes a moving image display frame displayed on a left side of the screen and a information display region displayed on the right side of the screen. In the example of Fig. 9A, the moving image [1], the moving image [2], the moving image [3] and the moving image [4] are displayed in the respective moving image display frames. Additional information or the like related to the corresponding moving image is displayed in each of the information display regions. Here, when the operator selects one of the displayed moving images, the selected moving imaged is enlarged and displayed or displayed with the full screen. Meantime, in the example of Fig. 9B, category switching sections 42A to 42C are displayed instead of (or in addition to) the menu character display section 42 shown in Fig. 9A. The category switching sections 42A to 42C are provided to switch on category basis the plurality of moving images which are classified by categories, or certain conditions (for example, date or genre related to the moving image is considered).

In Figs. 9A and 9B, when the operator traces the touch panel 20 of the mobile information terminal 1A, the moving image [1], the moving image [2], the moving image [3] and the moving image [4] displayed in the respective moving image display frames are shifted concurrently outside the screen, and a new moving image [5], a new moving image [6], a new moving image [7] and a new moving image [8] appear in the respective moving image display frames. Alternatively, in this case, it may be configured so that only the moving image corresponding to a position in which the operator traces is shifted and one new moving image appears instead of the shifted moving image without concurrently shifting the moving image [1], the moving image [2], the moving image [3] and the moving image [4] displayed in the respective moving image display frames outside the screen.

The moving image reproduction processing method according to aspects of the present invention can be applied to a mobile information terminal having composite functions such as a mobile phone function, an Internet function, a data storage function, a media reproduction function and a game function.

## Claims

1. A method for moving image reproduction processing in a mobile information terminal, the method comprising:
decoding encoded moving image information by a software decoder to display a moving image related to the moving image information on a display section; and
switching a processing for the moving image information from a process of decoding by the software decoder to a process of decoding by a hardware decoder to display the moving image information on the display section in accordance with an instruction by an operator.

2. The method according to claim 1, wherein
the encoded moving image information decoded by the software decoder is information having a resolution lower than that of the encoded moving image information decoded by the hardware decoder.

3. The method according to claim 2, wherein
the moving image based on the decoding by the software decoder is reduced and displayed on the display section, and the moving image based on the decoding by the hardware decoder is displayed with a full screen or an enlarged view on the display section.

4. The method according to claim 3, wherein
a plurality of moving images based on the decoding by the software decoder are simultaneously displayed on the display section, and the instruction by the operator is an operation for selecting one of the plurality of moving images.

5. The method according to claim 4, wherein
information of the plurality of moving images is delivered with multi-streams from the outside.

6. The method according to claim 5, wherein
the plurality of moving images are reproduced with streams, and when the selection operation is performed, the moving image selected by the selection operation is reproduced with streams continuously by the hardware decoder.

7. The method according to claim 5, wherein
the plurality of moving images are reproduced with streams, and when the selection operation is performed, high resolution information related to the moving image selected by the selection operation is stored first in a moving image information storage and a moving image related to the high resolution information is reproduced from a head part by the hardware decoder.

8. The method according to claim 3, wherein
a web content and the moving image based on the decoding by the software decoder as a moving image related to the web content are displayed on the display section in an overlapping manner and
when the instruction by the operator is performed, the moving image based on the decoding by the hardware decoder is displayed with the full screen or the enlarged view on the display section.

9. The method according to claim 8, wherein
alpha channel information is included in the moving image information related to the moving image, and alpha blend display is performed in display overlapping with the web content.

10. The method according to claim 3, wherein
a plurality of moving images based on the decoding by the software decoder are simultaneously displayed with a moving image display frame on the display section, and the plurality of moving images are shifted between frames while fixing the moving image display frame in accordance with an operation of tracing on the display section by the operator.

11. The method according to claim 3, wherein
a plurality of moving images based on the decoding by the software decoder are simultaneously displayed with a moving image display frame on the display section, and the plurality of moving images are shifted together with the moving image display frame in accordance with an operation of tracing on the display section by the operator.

12. The method according to claim 4, wherein
the plurality of moving images based on the decoding by the software decoder are classified by categories, and the plurality of moving images are simultaneously displayed on category basis.

13. A mobile information terminal, comprising:
a CPU (Central Processing Unit) that is adapted to control entirely processing of the mobile information terminal;
a hardware decoder that is adapted to decode an encoded moving image information; and
a display section that is adapted to display a moving image related to the decoded moving image information, wherein
the CPU controls a software decoder to decode the encoded moving image information to display a moving image related to the moving image information on the display section, and
the CPU switches a processing for the moving image information from a process of decoding by the software decoder to a process of decoding by the hardware decoder to display the moving image information on the display section when there is an instruction by an operator.

14. The mobile information terminal according to claim 13, wherein
the encoded moving image information decoded by the software decoder is information having a resolution lower than that of the encoded moving image information decoded by the hardware decoder.

15. The mobile information terminal according to claim 14, wherein
the CPU reduces and displays the moving image based on the decoding by the software decoder on the display section and displays the moving image with a full screen or an enlarged view on the display section based on the decoding by the hardware decoder.

16. The mobile information terminal according to claim 15, wherein
the CPU decodes a plurality of pieces of encoded moving image information in parallel by the software decoder to display a plurality of moving images related to the plurality of pieces of encoded moving image information simultaneously, and
when the CPU recognizes a selection instruction by the operator for the plurality of images, the CPU switches the processing for the selected image to the process of decoding by the hardware decoder to display the selected moving image with the full screen or the enlarged view on the display section.

17. The mobile information terminal according to claim 16, further comprising
a communication processing unit that is adapted to receive the plurality of the encoded moving image information delivered with a multi-stream.

18. The mobile information terminal according to claim 15, wherein
the CPU displays a web content and the moving image based on the decoding by the software decoder as a moving image related to the web content on the display section in an overlapping manner, and
when the instruction by the operator is performed, the CPU displays the moving image based on the decoding by the hardware decoder with the full screen or the enlarged view on the display section.

19. The mobile information terminal according to claim 13, wherein
the mobile information terminal has a size that is able to be gripped in one hand,
while gripping the mobile information terminal at a vertically long state, the CPU feeds sequentially the moving images based on the decoding by the software decoder in vertical direction to display new moving images, and
the number of column in the transverse direction is 2 or less.

20. The mobile information terminal according to claim 19, wherein
the CPU displays additional information for distinguishing between at least the moving image and another moving image on an upper portion or a lower portion of the moving image based on the decoding by the software decoder.

21. The mobile information terminal according to claim 19, wherein the number of the column in the transverse direction is 1.

22. The mobile information terminal according to claim 13, wherein
the mobile information terminal has a size that is able to be gripped in one hand,
while gripping the mobile information terminal in a transversely long state, the CPU feeds sequentially the moving images based on the decoding by software decoder in transverse direction to display new moving images, and
the number of column in the vertical direction is 4 or less.

23. The mobile information terminal according to claim 22, wherein the number of the column in the vertical direction is 3.

24. The mobile information terminal according to claim 22, wherein the number of the column in the vertical direction is 2, and
the CPU displays additional information for distinguishing between at least the moving image and another moving image on an upper portion or a lower portion of the moving image based on the decoding by the software decoder.

25. The mobile information terminal according to claim 15, wherein
the CPU decodes a plurality of pieces of encoded moving image information in parallel by the software decoder to display a plurality of moving images related to the plurality of pieces of encoded moving image information which are divided by a moving image display frame on the display section simultaneously, and
the CPU shifts the plurality of moving images between frames while fixing the moving image display frame in accordance with an operation of tracing on the display section by the operator.

26. The mobile information terminal according to claim 15, wherein
the CPU decodes a plurality of pieces of encoded moving image information in parallel by the software decoder to display a plurality of moving images related to the plurality of pieces of encoded moving image information which are divided by a moving image display frame on the display section simultaneously, and
the CPU shifts the plurality of moving images together with the moving image display frame in accordance with an operation of tracing on the display section by the operator.

27. The mobile information terminal according to claim 16, wherein
the mobile information terminal has a size that is able to be gripped in one hand, and
the CPU switches the display on the display section between a vertically long display and a transversely long display depending on a gripping state of the mobile information terminal, and changes the number of transverse/vertical display of moving images based on the decoding by the software decoder and a display size of the individual moving images.

28. The mobile information terminal according to claim 16, wherein
the CPU displays a menu screen having a plurality of information display sections on the display section, and displays the moving image based on the decoding by the software decoder in each of the plurality of information display sections.

29. The mobile information terminal according to claim 28, wherein
the plurality of moving images based on the decoding by the software decoder are classified by categories, and the CPU displays a plurality of category switching sections for switching the plurality of moving images on category basis on the menu screen.
